# EUROPÄISCHE PATENTANMELDUNG

(11) **EP 2 674 236 A1**
(43) Veröffentlichungstag der Anmeldung: **18.12.2013**
(21) Anmeldenummer: 13003053.9
(22) Anmeldetag: 14.06.2013
(51) Int. Cl.: B23B 31/113, B23B 31/107

(54) **Modulare Schnittstelle für Werkzeuge mit quer zur Axialrichtung wirkenden Strukturpaaren**

(30) Priorität: 15.06.2012 DE 102012011760
(71) Anmelder: Benz GmbH, Werkzeugsysteme, 77716 Haslach (DE)
(72) Erfinder: Geisselmann, Thomas, 77716 Fischerbach (DE)
(74) Vertreter: Thämer, Wolfgang

(57) **Zusammenfassung**

Die Erfindung betrifft eine Schnittstelle aus einer ersten ein Bearbeitungselement haltenden Baugruppe (20) und einer zweiten - das Bearbeitungselement tragenden oder aufweisenden - Baugruppe (90, 190), wobei das Bearbeitungselement ein Werkzeug (190) oder ein Werkzeughalter (90) mit eingesetztem Werkzeug (120) ist. Die erste Baugruppe (20) weist eine in axialer Richtung wirkende erste Anlagefläche (24) auf. Die zweite Baugruppe (90, 190) hat mindestens eine in axialer Richtung - in Richtung der ersten Baugruppe (20) - wirkende zweite Anlagefläche (93) zur Kontaktierung der erste Anlagefläche (24) der ersten Baugruppe (20). Dabei wird die Anlagefläche (24, 93) mindestens von zwei Vollstrukturen (11, 118) geschnitten, die in entsprechende Hohlstrukturen (12, 13, 25), mit denen sie jeweils ein Strukturpaar (10) bilden, eingreifen.

Mit der vorliegenden Erfindung wird eine Schnittstelle entwickelt, die bei jedem Werkzeugwechsel eine einfache Handhabung bei einer hohen Wiederholgenauigkeit bezüglich der Position der sich kontaktierenden Baugruppen gewährleistet.

## Beschreibung

Die Erfindung betrifft eine Schnittstelle aus einer ersten ein Bearbeitungselement haltenden Baugruppe und einer zweiten - das Bearbeitungselement tragenden oder aufweisenden - Baugruppe, wobei das Bearbeitungselement ein Werkzeug oder ein Werkzeughalter mit eingesetztem Werkzeug ist. Die erste Baugruppe weist eine in axialer Richtung - in Richtung der zweiten Baugruppe - wirkende Anlagefläche oder eine Gruppe aus mindestens drei in einer Ebene liegende Kontaktstellen auf. Die zweite Baugruppe hat mindestens eine in axialer Richtung - in Richtung der ersten Baugruppe - wirkende Anlagefläche oder eine Gruppe aus mindestens drei in einer Ebene liegende Kontaktstellen, zur Kontaktierung der Anlagefläche oder der korrespondieren Kontaktstellen der ersten Baugruppe.

Aus der EP 1 768 808 B1 ist ein Werkzeugadapter zur lösbaren und austauschbaren Befestigung in einer Werkzeugaufnahme einer Werkzeugmaschine bekannt. Der Werkzeugadapter besteht u.a. aus einem Kegelabschnitt und einem zylindrischen Bund. Im zylindrischen Bund befinden sich zwei einander gegenüberliegende kegelstumpfartige Querbohrungen, in die in die Werkzeugaufnahme einzuschraubende Spannbolzen mit ihren kegelstumpfartigen Spitzen eingeschraubt werden. Durch das Einschrauben der Spannbolzen wird der Werkzeugadapter gegen den zylindrischen Bund gespannt. Bei einem Wechsel des Werkzeugadapters kann es zu Verspannungen kommen, da die Spannbolzen nur nacheinander angezogen werden können. Zudem übertragen sich mögliche Außermittigkeiten der Gewinde- bzw. Kegelzapfen auf das Werkzeug. Auch müssen beide Spannbolzen beim Werkzeugadapterwechsel so weit herausgeschraubt werden, dass die Gefahr besteht, dass sie herausfallen.

Der vorliegenden Erfindung liegt das Problem zugrunde, eine Schnittstelle aus einer ersten Baugruppe und einer zweiten Baugruppe zu entwickeln, die bei jedem Werkzeugwechsel außermittig belasteter Werkzeuge eine einfache Handhabung bei einer hohen Wiederholgenauigkeit bezüglich der Position der zweiten Baugruppe gegenüber der ersten Baugruppe gewährleistet.

Das Problem wird mit den Merkmalen des Anspruchs 1 gelöst. Dazu wird die durch die plane Montagefuge gebildete Ebene mindestens von zwei Vollstrukturen geschnitten, die in entsprechende Hohlstrukturen, mit denen sie jeweils ein Strukturpaar bilden, eingreifen. Es ist jeweils die Voll- oder die Hohlstruktur eines Strukturpaares in der ersten oder der zweiten Baugruppe angeordnet. Bei der Verwendung von zwei Strukturpaaren hat höchstens ein Strukturpaar ein Strukturpaarteil mit nur einem Freiheitsgrad, dessen Richtung gegenüber der Mittellinie des Werkzeugträgers in Radialrichtung orientiert ist oder von dieser um bis zu ± 45 Winkelgrade abweicht. Bei der Verwendung von drei und mehr Strukturpaaren weist mindestens eines oder alle Strukturpaare keinen Freiheitsgrad auf. Alternativ weist bei der Verwendung von drei und mehr Strukturpaaren je ein Strukturpaarteil einen Freiheitsgrad auf, der gegenüber der Mittellinie des Werkzeugträgers in Radialrichtung orientiert ist, oder von dieser um bis zu ± 45 Winkelgrade abweicht. Alternativ weist ferner bei der Verwendung von drei und mehr Strukturpaaren je ein Strukturpaarteil einen Freiheitsgrad auf, wobei mindestens zwei Freiheitsgrade unterschiedliche Richtungen haben. Bei drei und mehr als drei auf einem Teilkreis äquidistant verteilt gelegenen Strukturpaaren ist mindestens eine Vollstruktur weglassbar. Bei zwei und mehr als zwei in der planen Montagefuge gelegenen Strukturpaaren bilden mindestens zwei Strukturpaare eine Gruppe, die in mindestens zwei Positionen wechselweise anordenbar sind.

Mit der Erfindung wird eine zweite Baugruppe gegenüber einer ersten Baugruppe verdrehsicher positioniert und wiederholgenau eingespannt. Dazu ist zwischen beiden - eine Schnittstelle bildende - Baugruppen als Zwischenelement ein Schalthebelelement eingebaut. Das Schalthebelelement ist in der ersten Baugruppe schwenk- und/oder längsverschiebbar gelagert. Es weist als Anlenkelemente für die zweite Baugruppe z.B. mehrere Innenstege auf. Die zweite Baugruppe hat entsprechende stegartige Hintergriffselemente. Letztere hintergreifen beim Einsetzen der zweiten Baugruppe in die erste die Anlenkelemente des Schalthebelelements. Das Hintergreifen der Anlenkelemente durch die Hintergriffselemente kann mit dem Hintergreifen eines herkömmlichen Bajonettverschlusses verglichen werden.

In den Ausführungsbeispielen ist die erste Baugruppe ein Werkzeugträger, der z.B. in einem rotierenden Spindelkopf eines Werkzeugwechselaggregats auswechselbar angeordnet ist. Der Werkzeugträger kann z.B. ein VDI-Adapter nach DIN 69880, ein SK-Adapater nach DIN 69871 oder ein HSK-Adapter Form A+C nach ISO 12164 sein. Die zweite Baugruppe stellt in der Regel einen werkzeugtragenden Werkzeughalter dar oder nur ein Werkzeug, das direkt an der ersten Baugruppe adaptierbar ist. Die hier vorzugsweise zu spannenden Werkzeuge werden durch Schnittkräfte belastet, die exzentrisch zur Mittellinie des jeweiligen Werkzeughalters wirken. Um diese Schnittkräfte effektiv abstützen zu können, sind u.a. zur Verdrehsicherung zwischen dem Werkzeugträger und dem Werkzeughalter mindestens zwei Strukturpaare angeordnet. Diese Strukturpaare verhindern nahezu spielfrei und wiederholgenau jede Relativbewegung zwischen dem Werkzeugträger und dem Werkzeughalter, die quer zur Axialrichtung orientiert ist.

Selbstverständlich kann die erste Baugruppe auch ein nicht rotierender Werkzeugträger sein, wie er als Stahlhalter eines Oberschlittens einer konventionellen Drehmaschine verwendet wird. Die zweite Baugruppe ist in diesem Fall der in einem Werkzeughalter angeordnete Drehstahl als Werkzeug oder Schneidenträger.

Weitere Einzelheiten der Erfindung ergeben sich aus den Unteransprüchen und der nachfolgenden Beschreibung einer schematisch dargestellten Ausführungsform.
- Figur 1:: Perspektivische Ansicht eines Werkzeugträgers und eines Werkzeughalters mit montiertem Werkzeug;
- Figur 2:: Perspektivische Ansicht eines Werkzeugträgers und eines Werkzeugs;
- Figur 3:: Perspektivische Vorderansicht des Werkzeugträgers;
- Figur 4:: Perspektivische Ansicht des Schalthebelelements mit der Exzenterschraube und der Spezialsenkschraube;
- Figur 5:: Perspektivische Rückansicht des Werkzeughalters;
- Figur 6:: Längsschnitt zu Figur 1 mit gespanntem Werkzeughalter;
- Figur 7:: Seitenansicht des Werkzeughalters mit der Schalthebelmechanik in Spannstellung;
- Figur 8:: wie Figur 6, jedoch mit einer um 180° geschwenkten Exzenterwelle der Schalthebelmechanik;
- Figur 9:: Seitenansicht des Werkzeughalters zu Figur 8 mit einem gegenüber der Ansicht um 45° geschwenkten Teilschnitt;
- Figur 10:: wie Figur 8, jedoch mit gezogenem Werkzeugadapter;
- Figur 11:: Seitenansicht des Werkzeughalters zu Figur 10;
- Figur 12:: wie Figur 10, jedoch mit einem um 90°geschwenkten Werkzeugadapter;
- Figur 13:: Seitenansicht des Werkzeughalters zu Figur 12;
- Figur 14:: Radialpositionierung mit zwei Strukturpaaren ohne Freiheitsgrade;
- Figur 15:: Radialpositionierung mit zwei Strukturpaaren mit einem Freiheitsgrad;
- Figur 16:: Radialpositionierung mit drei Strukturpaaren ohne Freiheitsgrade;
- Figur 17:: Radialpositionierung mit drei Strukturpaaren mit jeweils einem Freiheitsgrad;
- Figur 18:: Radialpositionierung mit vier Strukturpaaren ohne Freiheitsgrade;
- Figur 19:: Radialpositionierung mit vier Strukturpaaren mit jeweils einem Freiheitsgrad;
- Figur 20:: Exzenterwelle in der Stirnansicht der Exzenterseite, vergrößert;
- Figur 21:: Querschnitt durch die Exzenterwelle nach Figur 20, vergrößert;
- Figur 22:: Schalthebelelement, werkzeughalterseitige Ansicht, vergrößert;
- Figur 23:: Seitenansicht des Schalthebelelements, vergrößert;
- Figur 24:: wie Figur 22, jedoch werkzeugträgerseitige Ansicht, vergrößert.

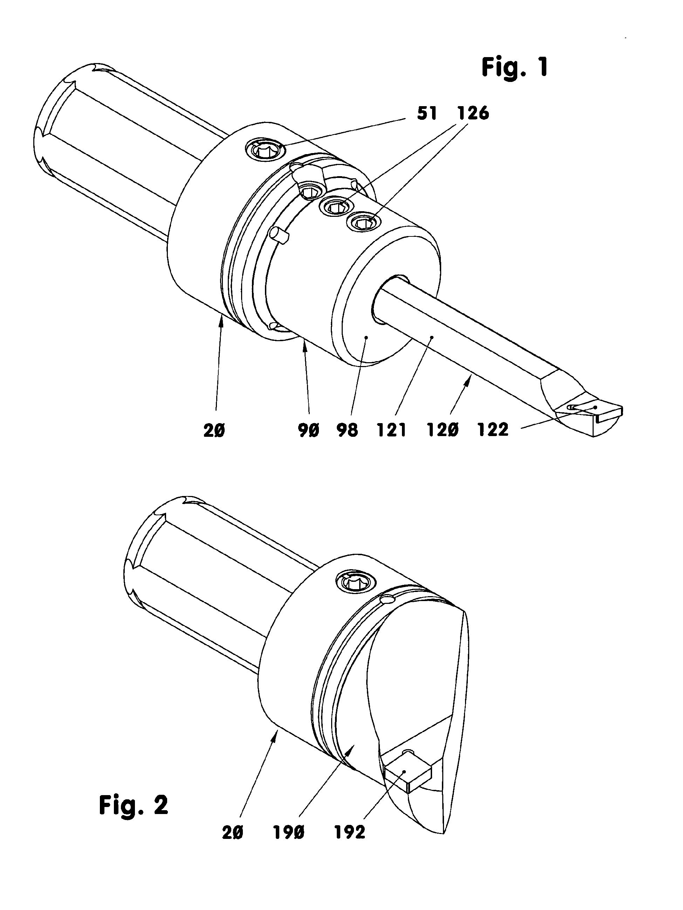

Die Figur 1 zeigt als erstes Bauteil der modularen Schnittstelle einen Werkzeugträger (20) mit einem auswechselbaren Werkzeughalter (90) als zweites Bauteil der modularen Schnittstelle. Der Werkzeughalter (90) trägt als Werkzeug (120) z.B. einen Innendrehmeißel. Der Werkzeugträger (20) kann beispielsweise in der Spindel eines Werkzeugaggregats gelagert werden. Die entsprechende Spindel und das dazugehörige Werkzeugaggregat sind hier nicht dargestellt.

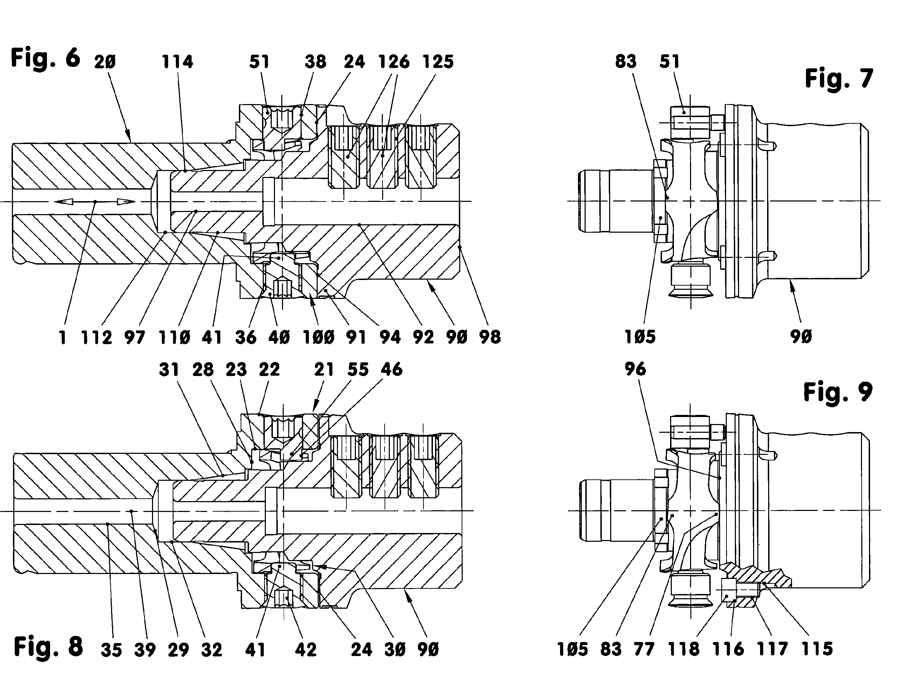

Im vorderen Bereich des Werkzeugträgers (20) befindet sich ein rohrförmiger Spanngetriebeabschnitt (21). Dieser Spanngetriebeabschnitt (21), vgl. Figur 7, hat z.B. eine zylindrische Außenwandung (22), eine zylindrische Innenwandung (23) - als Teil einer einen Werkzeughalter (90) aufnehmenden Ausnehmung (30) - und eine z.B. plane Stirnfläche (24).

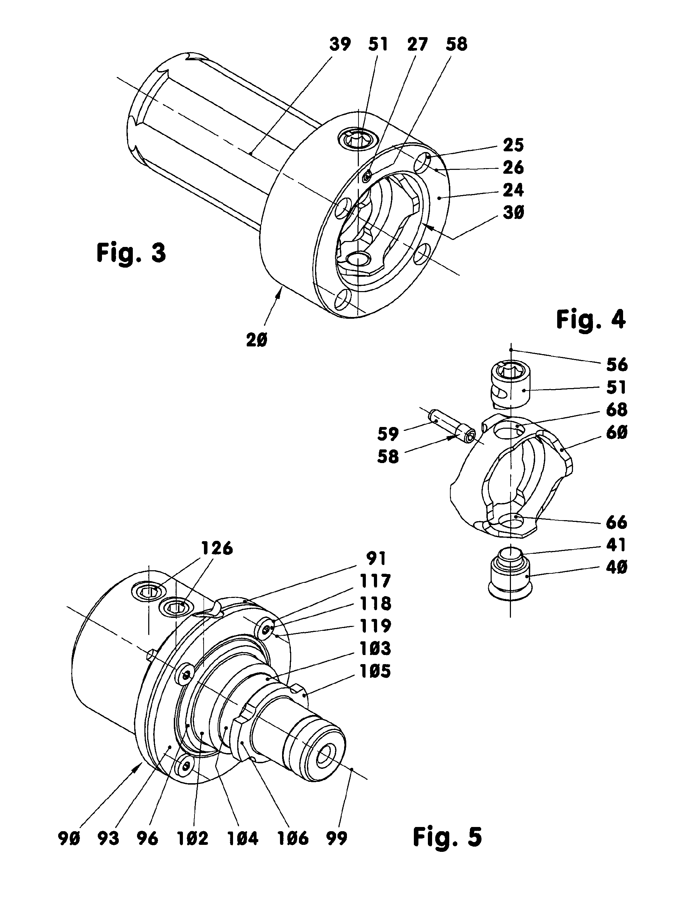

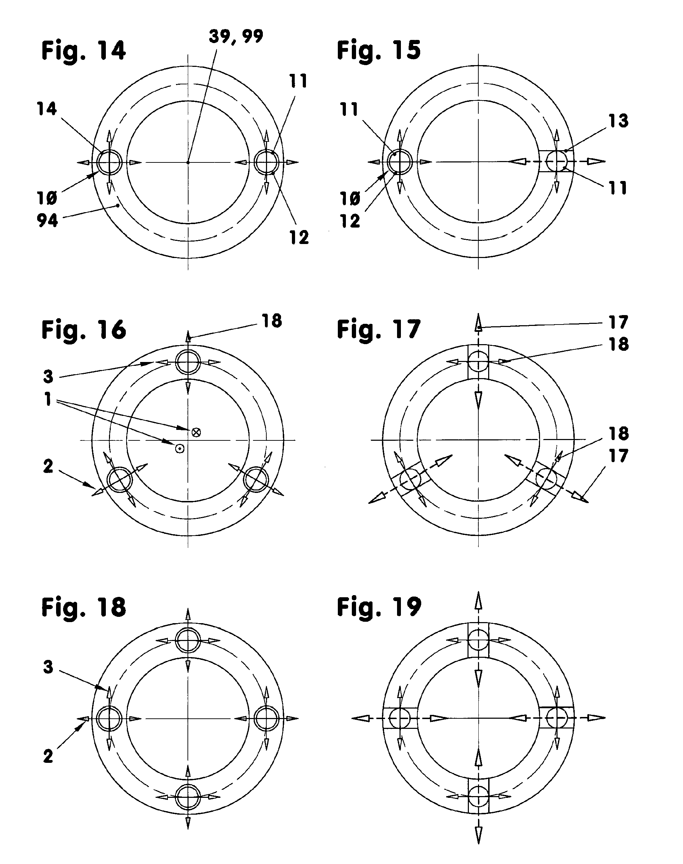

In der Stirn- bzw. Anlagefläche (24) sind nach Figur 3 vier Passbohrungen (25) angeordnet, die, ausgehend von der Anlagefläche (24), z.B. 2,7 mm tief sind. Der eng tolerierte Durchmesser der Passbohrungen (25) beträgt z.B. 6 mm. Die Mittellinien (26) der Passbohrungen (25) liegen auf einem gedachten Zylinder, dessen Mittellinie mit der Mittellinie (39) des Werkzeugträgers (20) zusammenfällt. Die untereinander parallelen Mittellinien (26) sind äquidistant auf dem gedachten Zylinder, der hier einen Durchmesser von 27,5 mm hat, verteilt, vgl. auch Figur 18.

Der sich an die Anlagefläche (24) anschließende Spanngetriebeabschnitt (21) hat bei einem Werkzeugträger (20) mit z.B. 50 mm Außendurchmesser eine Tiefe von z.B. 17,2 mm, während seine Wandstärke z.B. 9 mm misst. Die Innenwandung (23) endet z.B. vor einer planen Innenstirnfläche (28), in der sich ein kegelstumpfmantelförmiger Abschnitt (31) anschließt. Dieser Abschnitt (31) hat hier z.B. einen Maximaldurchmesser von 20 mm und einen Kegelwinkel von 16 Winkelgraden. Die Länge dieses kegelstumpfmantelförmigen Abschnitts (31) beträgt ca. 14,2 mm.

An den Abschnitt (31) schließt sich eine zumindest bereichsweise zylindrische Bohrung (32) an. Sie endet vor einer z.B. kegelstumpfmantelförmigen Innenstirnfläche (29), in die ggf. eine Kühl- und/oder Schmiermittelzuführbohrung (35) mündet. In der Bohrung (32) kann ein Dichtring eingesetzt werden, der die Bohrungen (32, 97) gegeneinander abdichtet.

Der Spanngetriebeabschnitt (21) des Werkzeugträgers (20) weist z.B. zwei einander gegenüberliegende Bohrungen (36, 38) auf.

Nach Figur 6 hat die Bohrung (36) z.B. ein Innengewinde, beispielsweise das Feingewinde M 10 x 1. In der Gewindebohrung (36) ist z.B. eine Spezialsenkschraube (40) fest eingeschraubt. Der Senkkopf dieser Schraube (40), der über eine Werkzeugausnehmung (42) verfügt, liegt verspannt an der Senkung der Gewindebohrung (36) an. Das andere Ende der Spezialsenkschraube (40) weist einen z.B. balligen, ggf. sphärisch gekrümmten Lagerzapfen (41) auf, der in die Ausnehmung (30) hineinragt. Der Durchmesser des Lagerzapfens (41) beträgt z.B. 6,5 mm.

In der Bohrung (38) ist nach Figur 6 eine Exzenterwelle (51) gelagert. Sie hat einen in die Ausnehmung (30) hineinragenden Exzenterzapfen (55).

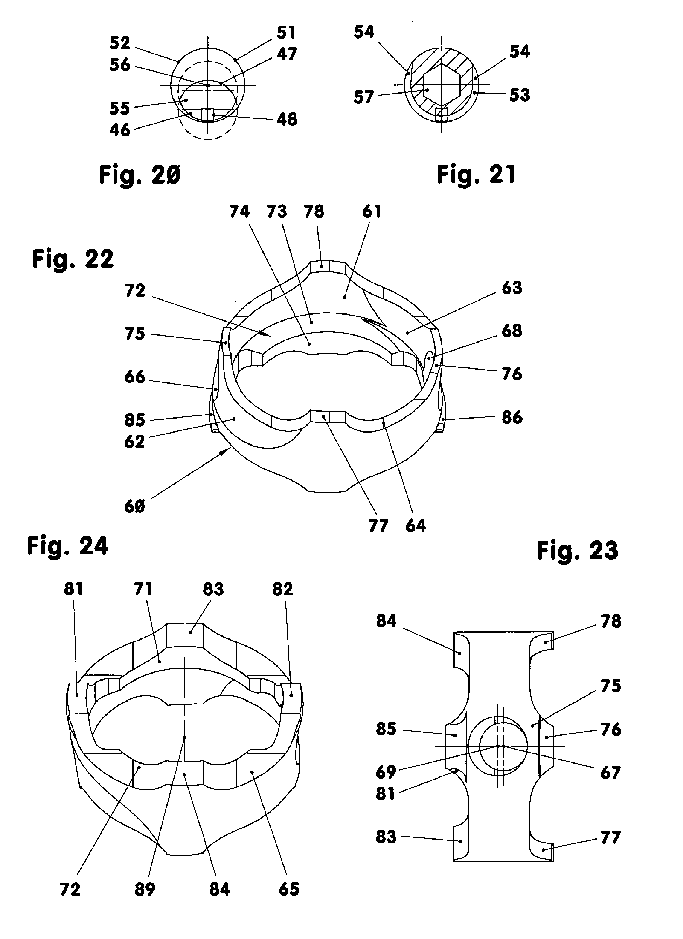

Die Exzenterwelle (51) hat eine glatte, zylindrische Außenfläche (52), die mit geringem Spiel oder einer Übergangspassung in einer ebenfalls glattwandigen Bohrung (38) sitzt. Im mittleren Bereich der Außenfläche (52) ist eine Teilringnut (53) eingearbeitet. Nach Figur 21 überdeckt die Teilringnut (53) komplett die untere Hälfte des dargestellten Querschnittes. In der oberen Querschnittshälfte sind die tangentialen Teilringnutausläufe (54) dargestellt. Die Mitten der Nutgründe der Teilringnutausläufe (54) sind nahezu parallel liegende Geraden, da der volle Querschnitt der Teilringnut (53) z.B. 185 Winkelgrade des Exzenterwellenumfangs überdeckt.

Die Teilringnut (53) hat in der rechten Querschnittshälfte z.B. einen kreisabschnittförmigen Querschnitt. Der Durchmesser des zu diesem Querschnitt gehörenden Kreises beträgt z.B. 3,3 mm. Die Höhe des kreisabschnittförmigen Querschnitts misst z.B. 39% des Kreisdurchmessers.

Um die Exzenterwelle (51) im Werkzeugträger (20) verliersicher zu halten und zugleich den Schwenkbereich der Exzenterwelle (51) zu begrenzen, befindet sich in der Stirnfläche (24) des Werkzeugträgers (20) eine Längsbohrung (27) mit M4-Gewindeabschnitt, in der ein Schwenkanschlagstift (58) eingeschraubt ist, vgl. Figuren 3 und 4. Die Längsbohrung (27) schneidet die Bohrung (38) genau so, dass der Zapfen (59) des Schwenkanschlagstifts (58) in die Teilringnut (53) der Exzenterwelle (51) eingreift. Der Durchmesser des Zapfens (59) ist passend zur Längsbohrung (27) z.B. geringfügig kleiner als 3,3 mm.

Die Exzenterwelle (51) hat einen nichtzylindrischen Exzenterzapfen (55), der eine aktive Verstellfläche (46) und eine passive Anschlagsfläche (47) aufweist. Dazu hat er quer zu seiner Mittellinie (56) einen unrunden Querschnitt, der sich aus zwei Kreisabschnitten zusammensetzt, die sich entlang ihrer Sehnen kontaktieren. Der Durchmesser der Kreisabschnitte beträgt z.B. 8 mm, während ihre Bogenhöhe z.B. 2,25 mm misst. Die Exzentrizität der Verstellfläche (46) beträgt z.B. 0,8 mm. Sie ist nach Figur 20 gegenüber der Mittellinie (56) nach unten versetzt. Die Exzentrizität der Anschlagsfläche (47) misst 3,3 mm und ist ebenfalls gegenüber der Mittellinie (56) nach unten versetzt.

Ggf. sind die Verstell- (46) und Anschlagsflächen (47) zumindest bereichsweise ballige, tonnenförmige oder sphärisch gekrümmte Außenflächen.

Die exzenterzapfenfreie Stirnseite der Exzenterwelle (51) hat eine Werkzeugausnehmung (57) mit z.B. einem sechskantförmigen Hohlquerschnitt. Zwischen der Werkzeugausnehmung (57) und der radialen Außenfläche (52) erstreckt sich eine z.B. 0,5 mm tiefe Nut (48) oder Kerbe zur Markierung der Position des Exzenterzapfens (51), vgl. Figuren 20 und 21. Die Nut (48) sitzt nach Figur 20 unterhalb des Exzenterzapfens (51).

Die Werkzeugausnehmung (57) der Exzenterwelle (51) ist z.B. größer als die Werkzeugausnehmung (42) der Spezialsenkschraube (40).

In der Ausnehmung (30) steckt nach Figur 6 der Werkzeughalter (90). Letzterer umfasst einen Flanschabschnitt (91), einen Verriegelungsabschnitt (100), einen Zapfenabschnitt (110) und einen Endabschnitt (112). Der z.B. nahezu scheibenförmige Flanschabschnitt (91) hat hier eine zylindrische Außenfläche, deren Außendurchmesser beispielsweise dem benachbarten Außendurchmesser des Werkzeugträgers (20) entspricht. Vorn hat der Flanschabschnitt (91) z.B. eine plane Stirnfläche (98), in deren Mitte eine zylindrische Bohrung (92) zur Aufnahme des Werkzeugs (120) angeordnet ist. Nach Figur 1 wird das Werkzeug (120), hier ein Innendrehmeißel, über seinen Schaft (121) mit drei Klemmschrauben (126) im Werkzeughalter (90) fixiert. Die Klemmschrauben (126) sitzen dazu in entsprechenden Gewindebohrungen (125). Die Werkzeugausnehmungen der Klemmschrauben (126) haben z.B. einen kleineren Hohlquerschnitt als die Werkzeugausnehmung (57) des Werkzeughalters (90).

Ggf. kann das Werkzeug (120) auch mittels eines Querpresssitzes oder dergleichen im Werkzeughalter (90) befestigt sein.

Gemäß Figur 2 steckt im Werkzeugträger (20) ein Werkzeug (190) in Form eines Außendrehmeißels. Dieser Außendrehmeißel (190), der hier eine Wendeschneidplatte (192) trägt, hat eine derartige Schnittstellenform, dass er in vergleichbarer Weise wie der Werkzeughalter (90) im Werkzeugträger (20) adaptiert werden kann.

Die Rückseite des Flanschabschnittes (91), vgl. Figur 5, weist z.B. eine plane Stirnfläche (93) auf, die als Anlagefläche zur Kontaktierung des Werkzeugträgers (20) dient. Die Stirnfläche (93) ist ggf. durch gerade oder ungerade Nuten in verschiedene Zonen aufgeteilt, so dass dort inselartige Kontaktflächen entstehen, deren jeweiliger Flächeninhalt beispielsweise nur wenige Quadratmillimeter beträgt.

Ggf. können die zueinander passend bearbeiteten Anlageflächen (24) und (93) kegelstumpfmantelförmig oder sphärisch gekrümmt ausgeführt sein. Der Kegelwinkel läge dann zwischen 170 und 190 Winkelgraden, während der Krümmungsradius größer als 200 mm wäre.

In der Anlagefläche (93) sind nach den Figuren 5 und 9 vier Gewindebohrungen (115) angeordnet, die, ausgehend von der Anlagefläche (93), im Durchmesser eng tolerierte, z.B. 2,5 mm tiefe Einsenkungen (116) aufweisen. Der Durchmesser der Einsenkungen beträgt 6 mm. Die Mittellinien (119) der Gewindebohrungen (115) liegen auf einem gedachten Zylinder, dessen Mittellinie mit der Mittellinie (99) des Werkzeughalters (90) zusammenfällt. Die untereinander parallelen Mittellinien (119) sind äquidistant auf dem gedachten Zylinder, der hier einen Durchmesser von 27,5 mm hat, verteilt, vgl. auch Figur 18.

In den Gewindebohrungen (115), die hier den Flanschabschnitt (91) durchdringen, sind jeweils Passschrauben (117) eingeschraubt. Der Kopf (118) der Passschrauben (117), der fest auf dem ringförmigen Grund der Einsenkungen (116) aufliegt, ragt z.B. 1,3 mm aus den Einsenkungen (116) heraus. Der eng tolerierte Kopfdurchmesser der Passschrauben (117) beträgt z.B. 6 mm.

Gegenüber dem Verriegelungsabschnitt (100) des Werkzeughalters (90) ist die Stirn- bzw. Anlagefläche (93) durch einen Wellenabsatz (95) abgetrennt. Letzterer hat eine plane Auswurffläche (96) und eine kegelstumpfmantelförmige Radialwandung. Der Kegelwinkel der Radialwandung beträgt z.B. 50 Winkelgrade. Im Bereich der Auswurffläche (96) hat der Flanschabschnitt (91) - in Axialrichtung (1) gesehen - z.B. eine geringfügig größere Wandstärke als im Bereich der Stirnfläche (93).

An die Auswurffläche (96) schließt sich ein kurzer zylindrischer Abschnitt (102) an, der eine Ringnut (103) mit z.B. zylindrischem Nutgrund (104) aufweist. Der Nutgrund (104) hat z.B. einen Durchmesser von 21,2 mm. Flanschseitig hat die Ringnut (103) z.B. eine kegelstumpfmantelförmige Flanke, deren Flankenwinkel 30 Winkelgrade misst. Die gegenüberliegende Nutflanke hat eine ebene Flankenfläche. Diese Flankenfläche gehört zu zwei Hintergriffsstegen (105, 106). Die Hintergriffsstege (105, 106) haben z.B. eine Wandstärke von z.B. 3 mm. Sie überdecken in Umfangsrichtung jeweils z.B. 60 Winkelgrade. Jeder Hintergriffssteg (105, 106) hat in Umfangsrichtung eine Seitenflanke, wobei die Seitenflanken (107) der Hintergriffsstege (105, 106) jeweils parallel zueinander ausgerichtet sind. Sie haben im Ausführungsbeispiel einen Abstand von 16 mm. Der maximale Durchmesser des Werkzeugträgers (20) im Bereich der Hintergriffsstege (105, 106) beträgt z.B. 25,7 mm.

Ggf. kann der zylindrische Abschnitt (102) durch einen Kegelstumpfmantel ersetzt werden.

Dem Verriegelungsabschnitt (100) ist ggf. der Zapfenabschnitt (110) nachgeschaltet. Letzterer kommt bei eingewechseltem Werkzeughalter (90) mit dem zylindrischen Endabschnitt (112) des Werkzeugträgers (20) in Kontakt. Die Kontaktfläche wird als erste Montagefuge (114) definiert. Diese Montagefuge (114), die ein radiales Spiel von mindestens 0,05 mm hat, kann auch die Form eines Kegelstumpfmantels haben, der dann großflächig am Abschnitt (31) anliegt. Je nach Ausführungsart kann der Zapfenabschnitt (110) komplett entfallen.

Innerhalb der Schnittstelle liegt gleichzeitig die hintere Stirnfläche (93) des Werkzeughalters (90) an der vorderen Stirnfläche (24) des Werkzeugträgers (20) z.B. großflächig an. Die dabei entstehende Kontaktfläche wird als zweite Montagefuge (94) bezeichnet.

Zwischen dem Spanngetriebeabschnitt (21) des Werkzeugträgers (20) und dem Verriegelungsabschnitt (100) des Werkzeughalters (90) ist das z.B. einteilige Schalthebelelement (60) angeordnet. Letzteres ist innerhalb des Werkzeugträgers (20) so orientiert, dass sein vorderer Bereich dem Werkzeughalter (90) bzw. dem Werkzeug (190) zugewandt ist.

Das Schalthebelelement (60) ist ein Ring, vgl. Figuren 4, 22 und 23, in dessen Bohrung (61) hier je zwei nach innen ragende Innenstege (71, 72) angeordnet sind. Der Bohrungsdurchmesser beträgt z.B. 26,6 mm. Die radiale Außenfläche des Schalthebelelements (60) hat großteils eine zylindrische Form. Ihr Durchmesser beträgt z.B. 31 mm. Im Bereich einer großen Querbohrung (68) weist sie jedoch eine Außenwandverjüngung (62) auf, die ein schaltbedingtes Verkippen auf engstem Raum ermöglicht. Durch die Verjüngung reduziert sich die Wandstärke des Schaltelements (60) - im Bereich einer Lasche (75) - zur vorderen Stirnfläche (64) hin z.B. von 2,2 mm auf 0,9 mm.

Die Bohrung (61) weist aus dem gleichen Grund eine Innenwandverjüngung (63) im Bereich der kleinen Querbohrung (66) auf. Hier reduziert sich die Wandstärke - im Bereich einer Lasche (76) - auf ein vergleichbares Maß. Beide Wandverjüngungen haben jeweils die Form eines Zylindermantelteils, wobei die Achse dieses Zylindermantels gegenüber der Mittellinie (89) des Schalthebelelements (60) z.B. um 7,5 Winkelgrade gekippt ist. Zwischen jeweils einer Querbohrung (66, 68) und der hinteren Stirnseite (65) des Schalthebelelements (60) ist je ein in Umfangsrichtung des Schalthebelelements ausgerichteter Steg (85, 86) angeordnet. Jeder dieser Stege (85, 86) hat eine torusteilförmig gewölbte Fläche. Über diese Fläche kontaktiert das Schalthebelelement (60) die Innenwandung (23) des Werkzeugträgers (20).

Im hinteren Bereich der Bohrung (61) sind Innenstege (71, 72) achsensymmetrisch zur Schalthebelelementmittellinie (89) angeordnet. Die Vorderflanken (73) der Innenstege (71, 72) sind kegelstumpfmantelförmige Flächen. Der Kegelwinkel beträgt hier 120 Winkelgrade. Die radialen Innenflächen (74) sind z.B. zylindrisch gewölbt. Im Bereich der Innenstege (71, 72) hat das Schalthebelelement (60) einen Durchmesser von z.B. 22,1 mm. Jeder Innensteg (71, 72) überdeckt einen Winkelbereich von z.B. 105 Winkelgraden.

Beide Querbohrungen (66, 68) des Schalthebelelements (60) sind um ca. 90 Winkelgrade gegenüber den Mitten der Innenstege (71, 72) versetzt angeordnet. Nach Figur 22 hat die rechts dargestellte Querbohrung (68) einen Durchmesser von ca. 8 mm, während die links gezeigte Querbohrung (66) einen Durchmesser von ca. 6,5 mm aufweist. Die Mittellinie (69) der Querbohrung (68) kreuzt die Mittellinie (89) des Spannhebelelements (60) in einem Abstand von ca. 0,07 mm. Dieser Versatz ermöglicht eine stabile Klemmlage der Exzenterwelle (51) bei geklemmtem Werkzeughalter (90).

Ggf. können die Querbohrungen (66, 68), deren Wandungen z.B. innen gewölbt oder kegelig gekrümmt sein können, auch Ausnehmungen mit nicht kreisförmigem Querschnitt sein.

Die hintere Stirnfläche (65) des Schalthebelelements (60), vgl. Figur 24, weist vier Vorsprünge (81-84) auf, die z.B. mindestens 2 mm über die reguläre Stirnfläche (65) überstehen. Die beiden größeren Vorsprünge (81, 82), die sich im Bereich der Querbohrungen (66, 68) und der Stege (85, 86) befinden, überragen die beiden anderen Vorsprünge um z.B. 1,1 mm. Ihre Stirnflächen messen einen Flächeninhalt von z.B. 14 mm². Alle Vorsprünge (81-84) haben jeweils eine plane Fläche, die normal zur Mittellinie (89) ausgerichtet ist. Die Vorsprünge (83, 84) liegen im Bereich der Innenstege (71, 72). Ihre Stirnflächen haben jeweils einen Flächeninhalt von ca. 22 mm².

Zwischen den Vorsprüngen (81-84) und der zwischen diesen Vorsprüngen gelegenen Niveau der Stirnfläche (65) sind die Übergänge durch große Radien realisiert. Die z.B. 6 mm großen Radien erleichtern das Einspuren der Hintergriffselemente (105, 106) beim Einsetzen des Werkzeughalters (90).

Die vordere Stirnfläche (64), vgl. Figur 22, hat vier Laschen (75-78), die das reguläre Stirnflächenniveau z.B. um maximal 3,2 mm überragen. Die größeren Laschen (75, 77, 78) stehen z.B. 2 mm über die kleinere Lasche (76) über. Die plane Stirnfläche der Lasche (75) ist normal zur Mittellinie (89) orientiert. Die Stirnflächen der beiden Ausdrücklaschen (77, 78), deren Flächeninhalt jeweils ca. 10 mm² aufweist, sind z.B. ca. mittig abgewinkelt, wobei nach Figur 22 die jeweils rechte Seite der Stirnfläche, also der jeweils abgewinkelte Bereich, gegenüber der linken Seite um 7,5 Winkelgrade zur Querbohrung (68) hin abfällt. In der Ebene, in der die jeweils rechten Seiten der Stirnflächen liegen, liegt auch die Stirnfläche der relativ kurzen Anschlaglasche (76), die einen Flächeninhalt von ca. 9 mm² hat. Diese Ebene ist normal zur Mittellinie des Zylinders ausgerichtet, zu dem die Außen- (62) und die Innenwandverjüngung (63) gehören.

In den Figuren 14 bis 19 ist die Montagefuge (94) nur prinzipiell dargestellt. Diese axial wirkende Montagefuge (94) wird geschnitten von quer zur Axialrichtung (1) orientierten Montagefugen (14), die die Bewegungsrichtung des Werkzeughalters (90) gegenüber dem Werkzeugträger (20) in Radialrichtung (2) und Umfangsrichtung (3) blockieren. Die Montagefugen (14) werden im Ausführungsbeispiel durch die in den Passbohrungen (25) steckenden Köpfe (118) der Passschrauben (117) realisiert. In den Figuren 14 bis 19 werden die Köpfe (118) verallgemeinernd als Vollstrukturen bezeichnet. Vollstrukturen sind beispielsweise Zylinder, regelmäßige und unregelmäßige Primen mit vier und mehr Längskanten, Polygonzapfen, Kegel, Pyramiden oder andere vergleichbare Geometriekörper. Diese können ggf. auch hohl ausgebildet sein.

Die Passbohrungen (25) werden verallgemeinernd als Hohlstukturen (12, 13) bezeichnet. Davon gibt es zwei Arten. Die erste Art ist eine Hohlstruktur (12), die die entsprechende Vollstruktur (11) so umgibt, dass diese sowohl in Radialrichtung (2) als auch in Umfangsrichtung (3) blockiert wird, vgl. Figuren 14, 16 und 18. Als Beispiel dient hier der Kopf (118), der nahezu spielfrei und wiederholgenau in der Passbohrung (25) steckt.

Die zweite Art der Hohlstruktur (13) lässt der Vollstruktur (11) eine Bewegungsrichtung, z.B. die Radial- (2) oder die Umfangsrichtung (3), quer zur Axialrichtung (1) offen. Eine derartige Hohlstruktur ist z.B. eine Nut (13), in die ein Zapfen als Vollstruktur (11) eingreift, vgl. Figur 15. Hier verhindert die Nut (13) ein Auswandern der Vollstruktur (11) in Umfangsrichtung. Die Hohlstrukturen (13) können auch ovale Langlöcher, Kanäle, oder Rinnen sein, wobei diese auch in Längsrichtung gekrümmt ausgeführt sein können.

In Figur 14 sind zwei Strukturpaare (10) gezeigt. Hier hat z.B. der Werkzeugträger zwei zylindrische Hohlstrukturen (12) in die passgenau jeweils eine Vollstruktur (11) des Werkzeughalters eingreift. Beide Strukturpaare (10) blockieren den Werkzeughalter gegenüber dem Werkzeugträger quer zur Axialrichtung ohne Freiheitsgrade. Die Blockierrichtungen (18) erstrecken sind in Radial- (2) und Umfangsrichtung (3).

Vergleichbares gilt für die Anordnung der statisch überbestimmten Strukturpaare (10) der Figuren 16 und 18. Die Anordnung aus Figur 18 ist im Ausführungsbeispiel realisiert.

In Figur 15 sind zwei Strukturpaare (10) dargestellt, von denen das linke keinen translatorischen Freiheitsgrad aufweist. Das rechte Strukturpaar (10) hat einen Freiheitsgrad in Radialrichtung (2). Somit kann die rechte Vollstruktur (11) nicht um die Mittellinie des linken Strukturpaares schwenken.

Die Anordnungen nach den Figuren 17 und 19 gelten nur für Strukturpaare (10), die aus Vollstrukturen (11) und Hohlstrukturen (13) mit je einem transversalen Freiheitsgrad (17) bestehen. Die Figur 17 zeigt eine statisch bestimmte Variante, während die Anordnung aus Figur 19 überbestimmt ist.

Soll nun in einen Werkzeugträger mit Hohlstrukturen (12) ein Werkzeughalter mit Vollstrukturen (11), nach Figur 18, z.B. in vier verschiedene Positionen eingesteckt werden, werden beim Werkzeughalter zwei Vollstrukturen weggelassen. Auf diese Weise ergeben sich vier um jeweils 45 Winkelgrade um die Mittellinie (99) verlagerte Einbaupositionen.

Dies ist auch möglich, wenn die Strukturpaare nicht auf einem Teilkreis liegen. In diesem Fall werden beispielsweise in der Montagefuge (94) jeweils zwei paarweise angeordnete Hohlstrukturen - als Gruppe - zwei komplementär angeordneten Vollstrukturen gegenüber positioniert. Sind nun in der Montagefuge (94) z.B. zwei weitere gruppierte Hohlstrukturen jeweils paarweise angeordnet, die jedesmal untereinander einen anderen Abstand haben, so können in dieser Montagefuge mindestens drei verschiedene Werkzeughalter an einem Werkzeugträger so positioniert werden, dass ihre Einbaulagen sicher differieren.

Nach der Montage sitzt das Schalthebelelement (60) so im Zwischenraum zwischen dem Spanngetriebeabschnitt (21) und dem Verriegelungsabschnitt (100), dass der Lagerzapfen (41) der Spezialsenkschraube (40) in die Querbohrung (66) hineinragt, während der Exzenterzapfen (55) der Exzenterwelle (51) in die größere Querbohrung (68) hineinragt, vgl. Figuren 6 und 8. Der Zapfen (41) sitzt mit minimalem Spiel in der entsprechenden Querbohrung (66). Eine Übergangspassung ist hier auch denkbar. Der Zapfen (55) der Exzenterwelle (51) liegt nach Figur 6 nur mit seiner Verstellfläche (46) in der Querbohrung (68) an.

In Figur 6 wird der im Werkzeugträger (20) fest eingespannte Werkzeughalter (90) gezeigt. Beide Teile (20, 90) kontaktieren einander spielfrei und wiederholgenau in den Montagefugen (24) und (114) sowie zwischen den Passschrauben (117) und den Passbohrungen (25). Das Schalthebelelement (60) wird über die Exzenterwelle (51) mit ihren Vorsprüngen (83, 84) fest - unter einer elastischen Eigenverformung - gegen die Hintergriffsstege (105, 106) gepresst, vgl. Figur 7. In der Querbohrung (68) liegt dabei die Verstellfläche (46) des Exzenterzapfens (55) im linken Bohrungsbereich an. Die Stirnflächen der Vorsprünge (83, 84) liegen plan an den Hintergriffsstegen (105, 106) an.

Das Spannhebelelement (60) hat somit die Wirkung eines Federelements, das die Spannkraft der Schnittstelle erzeugt. Die Federkraft und die dazugehörige Verformbarkeit werden durch die spezielle geometrische Gestaltung des Spannhebelelements (60) ermöglicht.

Zum Lösen des Werkzeughalters (90) wird die Exzenterwelle (51) über ihre Werkzeugausnehmung (57) z.B. 185 Winkelgrade um ihre Mittellinie (56) in einer Linksdrehung geschwenkt, vgl. Figur 8. Der Schwenkweg wird gezielt begrenzt durch die Gestalt der Teilringnut (53), vgl. Figuren 20 und 21. Die Markierung (48) der Exzenterwelle (51) ist nun dem Werkzeughalter (90) zugewandt. In der Querbohrung (68) kommt jetzt die Verstellfläche (46) des Exzenterzapfens (55) nur im rechten Bohrungsbereich zur Anlage. Dadurch kippt das Schalthebelelement (60) zwangsläufig um ca. 3,2 Winkelgrade nach rechts, wobei der Drehpunkt der Schwenkbewegung ca. im Zentrum des Lagerzapfens (41) der Spezialsenkschraube (40) liegt. Hierbei haben sich zum einen die Vorsprünge (83, 84) von den Hintergriffsstegen (105, 106) gelöst. Nahezu gleichzeitig haben sich zum anderen die Ausdrücklaschen (77, 78) an der planen Auswurffläche (96) des Werkzeughalters (90) angelegt und diesen zentrisch um ca. 0,32 mm nach rechts verschoben. Durch die Exzenter- bzw. Keilgetriebewirkung zwischen dem Exzenterzapfen (55) und der Querbohrung (68), sowie durch die Hebelübersetzung des Schalthebelelements (60), wird durch die 185°-Drehung der Exzenterwelle (51) eine sehr große Lösekraft erzeugt, mit der jeder noch so festsitzende Werkzeughalter (90) vom Werkzeugträger (20) gelöst werden kann.

Die Köpfe (118) der Passschrauben (117) stecken in dieser Lösephase noch bereichsweise in den Passbohrungen (25) des Werkzeugträgers (20).

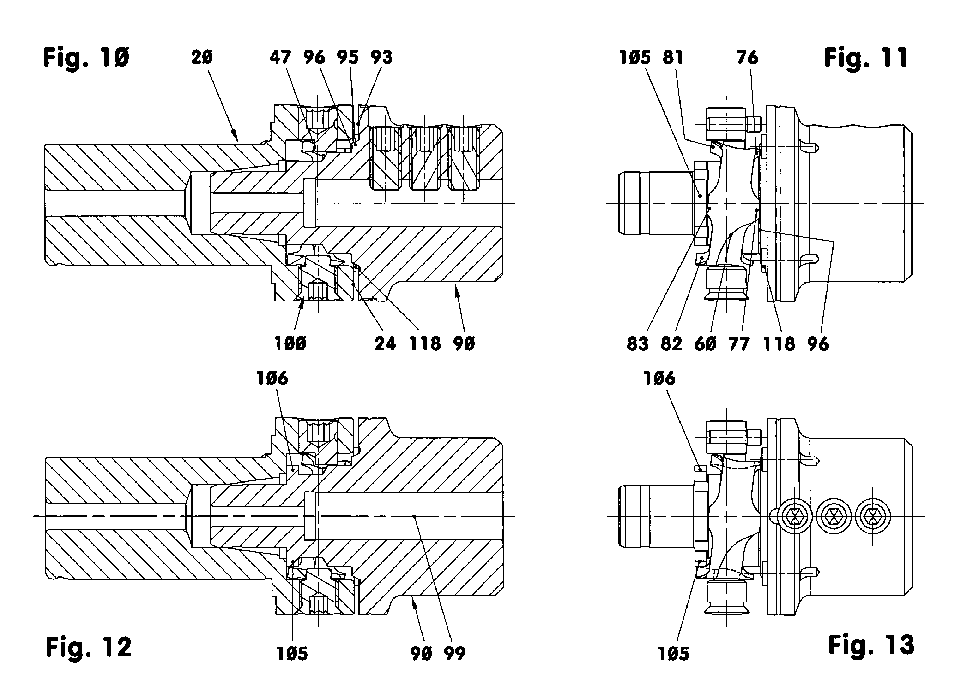

In einem weiteren Schritt wird der schon vorgelöste Werkzeughalter (90) vom Bediener, axial mit nur noch geringem Kraftaufwand, nach rechts gezogen, vgl. Figuren 10 und 11. Während dieser Bewegung schwenkt das Schalthebelelement (60) um weitere ca. 4,3 Winkelgrade nach rechts, so dass die Ebenen der Stirnflächen der Vorsprünge (81-84) einen Winkel von z.B. 7,5 Winkelgraden zu ihrer aus den Figuren 6 und 7 bekannten Lage einnehmen. Die Schwenkbewegung entsteht durch das Anlegen der Hintergriffsstege (105, 106) an den Vorsprüngen (83, 84). Die Kippbewegung des Schalthebelelements (60) wird begrenzt durch das Anschlagen des linken Bereichs der Querbohrung (68) an der Anschlagfläche (47) des Exzenterzapfens (55). Gleichzeitig bewegen sich auch die abgewinkelten Stirnbereiche der Ausdrücklaschen (77, 78) in Richtung der Auswurffläche (96), jedoch ohne diese aufgrund der Flächenabwinkelungen zu kontaktieren.

Durch die beschriebene Zugbewegung wird der Spalt zwischen den Anlageflächen (24) und (93) auf z.B. 1,9 mm vergrößert. Hierdurch kommen die Köpfe (118) der Passschrauben (117) frei.

In einem letzten Schritt wird der Werkzeughalter (90) vom Bediener um 90 Winkelgrade um seine Mittellinie (99) nach rechts oder links geschwenkt, damit die Hintergriffsstege (105, 106) im Schalthebelelement (60) die beiden Lücken zwischen den Innenstegen (71, 72) passieren können. Der Werkzeughalter (90) kann nun problemlos aus dem Werkzeugträger (20) entfernt werden.

Das Einsetzen des Werkzeughalters (90) in den Werkzeugträger (20) erfolgt in umgekehrter Reihenfolge. Der Werkzeughalter (90) wird bis zum Anschlagen in den Werkzeugträger (20) so eingeschoben, dass die Hintergriffsstege (105, 106) zwischen den Innenstegen (71, 72) hindurch hinter Letztere gelangen. Dabei ist die Markierung (48) der Exzenterwelle (51) dem Werkzeughalter (90) zugewandt.

In einem weiteren Schritt wird der Werkzeughalter (90) um ca. 90 Winkelgrade nach rechts oder links geschwenkt und dabei axial so angedrückt, dass die Köpfe (118) der Passschrauben (117) in die Passbohrungen (25) hineinrutschen. Er hält jetzt mit Spiel - aber verliersicher - in der Ausnehmung (30). Abschließend wird die Exzenterwelle (51) mit einem Sechskantschlüssel um 185 Winkelgrade nach rechts geschwenkt. Sobald die Exzenterwelle (51) um 180 Winkelgrade verschwenkt wurde, hat die Klemmkraft der Spannmechanik ihr Maximum erreicht. Bei dem Weiterdrehen um 5 weitere Winkelgrade, erst dann kontaktiert der Teilringnutauslauf (54) der Exzenterwelle (51) den Schwenkanschlagstift (58), fällt die Klemmkraft wieder geringfügig ab, weil die Verstellfläche (46) ihren Totpunkt überschritten hat. Dadurch gelangt die Exzenterwelle (51) in der Querbohrung (38) in eine stabile, selbstsichernde Position. Um zu verhindern, dass durch die neue Exzenterzapfenlage das Schalthebelelement (60) mit seiner Mittellinie (89) von der Mittellinie (99, 39) wegwandert, ist die Querbohrung (68) gegenüber der Mittellinie (89) entsprechend um hier 0,07 mm versetzt angeordnet.

Durch das Verschwenken der Exzenterwelle legen sich die beiden Vorsprünge (83, 84) zeitgleich an den Hintergriffsstegen (105, 106) an und ziehen gleichförmig und ohne jedes Verkanten die Montagefugen (94) zu. Der Werkzeughalter (90) sitzt nun spielfrei und wiederholgenau im Werkzeugträger (20). Die in den Passbohrungen (25) sitzenden Passschrauben (117) zentrieren die Teile (20, 90) in Umfangsrichtung gegeneinander und quer zur Mittellinie (99).

Ggf. können statt einer Exzenterwelle (51) und einer Spezialsenkschraube (40) auch zwei Exzenterwellen (51) verwendet werden. In diesen Fall verdoppelt sich der Gesamthub des Schalthebelelements (60).

### Bezugszeichenliste:

- 1: Axialrichtung
- 2: Radialrichtung (Polarkoordinaten)
- 3: Umfangsrichtung (Polarkoordinaten)
- 10: Strukturpaar
- 11: Vollstrukturen, vgl. (118); Teil, Strukturpaarteil
- 12: Hohlstrukturen, vgl. (25); Teil, Strukturpaarteil
- 13: Hohlstrukturen mit einem Freiheitsgrad, Teil
- 14: Montagefuge zwischen (11) und (12)
- 17: Freiheitsgrad, transversal
- 18: Blockierrichtungen
- 20: Werkzeugträger
- 21: Spanngetriebeabschnitt
- 22: Außenwandung
- 23: Innenwandung
- 24: Stirnfläche; Anlagefläche, Kontaktstelle
- 25: Passbohrungen, Hohlstrukturen
- 26: Mittellinien
- 27: Längsbohrung für Schwenkanschlagstift
- 28: Innenstirnfläche, vorn
- 29: Innenstirnfläche, hinten
- 30: Ausnehmung, zentral
- 31: Abschnitt, kegelstumpfmantelförmig
- 32: Bohrung
- 35: Zuführbohrung, Schmiermittelzuführbohrung
- 36: Gewindebohrung für Spezialsenkschraube
- 38: Querbohrung, zylindrisch
- 39: Mittellinie des Werkzeugträgers, Rotationsachse
- 40: Spezialsenkschraube
- 41: Lagerzapfen, Zapfen
- 42: Werkzeugausnehmung
- 46: Verstellfläche
- 47: Anschlagsfläche
- 48: Nut, Markierung
- 51: Exzenterwelle
- 52: Außenfläche, radial
- 53: Teilringnut
- 54: Teilringnutausläufe
- 55: Exzenterzapfen, Zapfen
- 56: Mittellinie von (55)
- 57: Werkzeugausnehmung
- 58: Schwenkanschlagstift
- 59: Zapfen
- 60: Schalthebelelement
- 61: Bohrung, groß
- 62: Außenwandverjüngung
- 63: Innenwandverjüngung
- 64: Stirnfläche, vorn
- 65: Stirnfläche, hinten
- 66: Querbohrung, klein
- 67: Mittellinie zu (66)
- 68: Querbohrung, groß
- 69: Mittellinie zu (68)
- 71, 72: Innenstege, Anlenkelemente
- 73: Vorderflanken
- 74: Innenflächen, radial
- 75: Anschlaglasche, vorn bei (61)
- 76: Lasche, vorn bei (62)
- 77: Ausdrücklasche, vorn bei (71)
- 78: Ausdrücklasche, vorn bei (72)
- 81: Vorsprung, hinten bei (61)
- 82: Vorsprung, hinten bei (62)
- 83: Vorsprung, hinten an (71)
- 84: Vorsprung, hinten an (72)
- 85: Steg, torusteilförmig; an (81)
- 86: Steg, torusteilförmig; an (82)
- 89: Mittellinie von (60)
- 90: Werkzeughalter
- 91: Flanschabschnitt
- 92: Bohrung für Werkzeug
- 93: Stirnfläche, rückseitig; Anlagefläche, Kontaktstelle
- 94: Montagefuge, zweite
- 95: Wellenabsatz
- 96: Auswurffläche
- 97: Bohrung für Schmiermittelzufuhr
- 98: Stirnfläche, vorn
- 99: Mittellinie
- 100: Verriegelungsabschnitt
- 102: Abschnitt, zylindrisch
- 103: Ringnut
- 104: Nutgrund, zylindrisch
- 105, 106: Hintergriffsstege, Hintergriffselemente
- 110: Zapfenabschnitt; Abschnitt, zylinderförmig
- 112: Endabschnitt, zylindrisch
- 114: Montagefuge, erste
- 115: Gewindebohrungen
- 116: Einsenkungen
- 117: Passschraube
- 118: Kopf, Vollstrukturen
- 119: Mittellinien
- 120: Werkzeug; Schneidenträger mit Schneide
- 121: Schaft
- 122: Schneide; Wendeschneidplatte
- 125: Gewindebohrungen
- 126: Klemmschrauben
- 190: Werkzeug, Schneidenträger mit Schneide; direkt in Werkzeugträger adaptierbar
- 192: Schneide; Wendeschneidplatte

## Patentansprüche

1. Schnittstelle aus einer ersten ein Bearbeitungselement haltenden Baugruppe (20) und einer zweiten - das Bearbeitungselement tragenden oder aufweisenden - Baugruppe (90, 190), wobei das Bearbeitungselement ein Werkzeug (190) oder ein Werkzeughalter (90) mit eingesetztem Werkzeug (120) ist,
- wobei die erste Baugruppe (20), die eine Mittellinie (39) aufweist, eine in axialer Richtung - in Richtung der zweiten Baugruppe (90, 190) - wirkende Anlagefläche (24) oder eine Gruppe aus mindestens drei in einer Ebene (24) liegende Kontaktstellen aufweist und
- wobei die zweite Baugruppe (90, 190) mindestens eine in axialer Richtung - in Richtung der ersten Baugruppe (20) - wirkende Anlagefläche (93) oder eine Gruppe aus mindestens drei in einer Ebene (93) liegende Kontaktstellen zur Kontaktierung der Anlagefläche (24) oder korrespondieren Kontaktstellen der ersten Baugruppe (20) aufweist,
**dadurch gekennzeichnet,**
- **dass** die Ebene (24) und/oder die Ebene (93) mindestens von zwei Vollstrukturen (11, 118) geschnitten wird, die in entsprechende Hohlstrukturen (12, 13, 25), mit denen sie jeweils ein Strukturpaar (10) bilden, eingreifen,
- **dass** jeweils ein Teil (11; 12, 13) eines Strukturpaares (10) in der ersten (20) oder der zweiten Baugruppe (90, 190) angeordnet ist,
- **dass** bei der Verwendung von zwei Strukturpaaren (10) höchstens ein Strukturpaar (10) ein Teil (13) mit nur einem Freiheitsgrad (17) hat, dessen Richtung gegenüber der Mittellinie (39) in Radialrichtung (2) orientiert ist oder von dieser um bis zu ± 45 Winkelgrade abweicht,
- **dass** bei der Verwendung von drei und mehr Strukturpaaren (10) mindestens eines (10) oder alle Strukturpaare (10) keinen Freiheitsgrad aufweisen,
- oder dass bei der Verwendung von drei und mehr Strukturpaaren (10) je ein Teil (13) einen Freiheitsgrad (17) aufweist, der gegenüber der Mittellinie (39) in Radialrichtung (2) orientiert ist, oder von dieser um bis zu ± 45 Winkelgrade abweicht,
- oder dass bei der Verwendung von drei und mehr Strukturpaaren (10) je ein Teil (13) einen Freiheitsgrad (17) aufweist, wobei mindestens zwei Freiheitsgrade (17) unterschiedliche Richtungen haben,
- **dass** bei drei und mehr als drei auf einem Teilkreis äquidistant verteilt gelegenen Strukturpaaren mindestens eine Vollstruktur (11, 118) weglassbar ist und
- **dass** bei zwei und mehr als zwei in den Ebenen (24, 93) gelegenen Strukturpaaren (10) mindestens zwei Strukturpaare (10) eine Gruppe bilden, die in mindestens zwei Positionen wechselweise anordenbar sind.

2. Schnittstelle gemäß Anspruch 1, **dadurch gekennzeichnet, dass** in der Ausnehmung (30) der ersten Baugruppe (20) ein Schalthebelelement (60) längsverschiebbar oder schwenkbar angeordnet ist, dass das Schalthebelelement (60) mindestens ein - die zweite Baugruppe (90, 190) anlenkendes - Anlenkelement (71, 72) hat und dass die zweite Baugruppe (90, 190) mindestens ein Hintergriffselement (105, 106) hat, das durch eine Schwenkbewegung der zweiten Baugruppe (90, 190) hinter das Anlenkelement (71, 72) des Schalthebelelements (60) bringbar ist.

3. Schnittstelle gemäß Anspruch 1, **dadurch gekennzeichnet, dass** die erste Baugruppe (20) zur Zentrierung in Radialrichtung (2) eine Ausnehmung (30) hat, die mindestens einen zylinder- oder kegelstumpfmantelförmigen Abschnitt (31) aufweist, in den ein zylinder- oder kegelstumpfförmiger Abschnitt (110) der zweiten Baugruppe (90, 190) mit einem flächenhaften Kontakt einsetzbar ist.

4. Schnittstelle gemäß Anspruch 1, **dadurch gekennzeichnet, dass** das Schalthebelelement (60) ringförmig gestaltet ist und mindestens zwei Querbohrungen (66, 68) aufweist.

5. Schnittstelle gemäß Anspruch 1, **dadurch gekennzeichnet, dass** die erste Baugruppe (20) zur Lagerung des Schalthebelelements (60) mindestens zwei Zapfen (41, 55) aufweist.

6. Schnittstelle gemäß Anspruch 1, **dadurch gekennzeichnet, dass** mindestens ein Zapfen (41) ortsfest an der ersten Baugruppe (20) angeordnet ist, während mindestens ein Zapfen (55) - exzentrisch gelagert - schwenkbewegbar ist.

7. Schnittstelle gemäß Anspruch 5, **dadurch gekennzeichnet, dass** in der ersten Baugruppe (20) die Mittellinie des Zapfens (41) und die Schwenkachse des Zapfens (55) zueinander fluchten.

8. Schnittstelle gemäß Anspruch 1, **dadurch gekennzeichnet, dass** die Anlenkelemente (71, 72) des Schalthebelelements (60) radial nach innen abstehende Innenstege sind.

9. Schnittstelle gemäß Anspruch 1, **dadurch gekennzeichnet, dass** die Hintergriffselemente (105, 106) der zweiten Baugruppe (90, 190) radial nach außen abstehende Hintergriffsstege sind.
